(19) Europäisches Patentamt
European Patent Office
Office européen des brevets

(11) EP 4 716 144 A2

(12) EUROPEAN PATENT APPLICATION

(43) Date of publication:
25.03.2026 Bulletin 2026/13

(51) International Patent Classification (IPC):
$H04L\ 9/00^{(2022.01)}$     $G06F\ 7/50^{(2006.01)}$
$G06F\ 5/00^{(2006.01)}$     $G06F\ 7/72^{(2006.01)}$
$H03K\ 19/20^{(2006.01)}$

(21) Application number: 25201633.2

(22) Date of filing: 11.09.2025

(52) Cooperative Patent Classification (CPC):
G06F 7/50; G06F 7/72; H04L 9/003; H03K 19/20;
H04L 2209/046

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 19.09.2024 US 202418890491

(71) Applicant: Microsoft Technology Licensing, LLC
Redmond, WA 98052 (US)

(72) Inventors:
• PATEL, Nilesh Baldevbhai
Redmond, 98052 (US)
• BISHEH NIASAR, Mojtaba
Redmond, 98052 (US)
• PILLILLI, Bharat S.
Redmond, 98052 (US)
• KARABULUT, Emre
Redmond, 98052 (US)

(74) Representative: CMS Cameron McKenna Nabarro
Olswang LLP
Cannon Place
78 Cannon Street
London EC4N 6AF (GB)

(54) **LOW-COST MASKING FOR POST-QUANTUM CRYPTOGRAPHY**

(57) Devices, systems, and methods for secure modular addition and subtraction are provided. A modular adder and subtractor circuit with masking circuit includes an arithmetic to Boolean (A2B) conversion operator configured to convert (i) a second sum and (ii) a value determined based on a first sum, to Boolean resulting in first and second Boolean values, a shifter configured to (i) make a most significant bit of the first Boolean value a least significant bit resulting in a shifted first Boolean value and (ii) make the most significant bit of the second Boolean value a least significant bit resulting in a shifted second Boolean value, and a Boolean to arithmetic (B2A) conversion operator, configured to convert a representation of the shifted first Boolean value and a representation of the shifted second Boolean value to arithmetic representation resulting in first and second arithmetic values, respectively.

FIG. 1

**Description**

BACKGROUND

Side-Channel Analysis (SCA) attacks exploit observable information, like power consumption or electromagnetic radiation, from cryptographic devices. SCA attacks present a significant risk to cryptography algorithms. The SCA attacks can potentially reveal secret keys used during the execution of cryptographic algorithms, thus compromising security.

Although cryptography algorithms designed for post-quantum cryptography are structured to withstand threats from quantum computing, they remain susceptible to SCAs. This vulnerability can be negated by robust countermeasures to secure cryptographic implementations.

SCA attacks are generally categorized into two main types: (i) profiled attacks, which rely on a pre-acquired model of the behavior of the target device behavior, and (ii) non-profiled attacks, which do not use such models.

Effective countermeasures to SCA attacks aim to diminish the correlation between the secret data being processed and the side-channel emissions captured. This involves design trade-offs, often increasing the overhead in terms of design complexity and resource usage.

Masking is a formal approach to thwart multi-trace SCA attacks. Masking includes concealing the secret by blending it with random data. However, traditional masking solutions significantly increase the area consumed by hardware, power consumption of the hardware, latency of the hardware, and/or throughput of the hardware. The increase is often by a factor of two or three as compared to non-masked solutions.

SUMMARY

A method, device, system, or a machine-readable medium for modular adder and subtractor circuit with masking are provided. A circuit can include an arithmetic to Boolean (A2B) conversion operator configured to convert (i) a second sum and (ii) a value determined based on a first sum, to Boolean resulting in first and second Boolean values. The circuit can include a shifter configured to (i) make a most significant bit of the first Boolean value a least significant bit resulting in a shifted first Boolean value and (ii) make the most significant bit of the second Boolean value a least significant bit resulting in a shifted second Boolean value. The circuit can include a Boolean to arithmetic (B2A) conversion operator, configured to convert a representation of the shifted first Boolean value and a representation of the shifted second Boolean value to arithmetic representation resulting in first and second arithmetic values, respectively.

The circuit can further include a first adder configured to receive first and second shares of a first operand and generate the first sum. The circuit can further include a second adder configured to receive first and second shares of a second operand and generate the second sum. The circuit can further include a first subtractor configured to receive (i) the first share of the second operand and (ii) a modulus value and generate a first difference. The circuit can further include a multiplexer configured to receive the first share of the second operand and the first difference and provide either the first share of the second operand or the first difference as output based on a control signal. The control signal, when in a first state, can configure the circuit as an adder and when in a second, different state, can configure the circuit as a subtractor.

The circuit further include a third adder configured to receive the first sum and a constant value and generate a third sum, wherein the value determined based on the first sum is the third sum. The circuit can further include first and second logic gates situated between the shifter and the B2A conversion operator, the first logic gate configured to provide, based on the shifted first Boolean value, the representation of the shifted first Boolean value and the second logic gate configured to provide, based on the shifted second Boolean value, the representation of the shifted second Boolean value.

The circuit can further include second and third subtractors, the second subtractor, the second subtractor configured to receive the first sum and the first arithmetic value and generate a first result, the third subtractor configured to receive the second sum and the second arithmetic value and generate a second result.

A method for modular adder and subtractor circuit operation with masking can include converting, by an arithmetic to Boolean (A2B) conversion operator (i) a second sum and (ii) a value determined based on a first sum, to Boolean resulting in first and second Boolean values. The method can further include shifting, by a shifter, a most significant bit of the first Boolean value to a least significant bit resulting in a shifted first Boolean value. The method can further include shifting, by the shifter, a most significant bit of the second Boolean value to a least significant bit resulting in a shifted second Boolean value. The method can further include converting, by a Boolean to arithmetic (B2A) conversion operator, a representation of the shifted first Boolean value and a representation of the shifted second Boolean value to arithmetic representation resulting in first and second arithmetic values, respectively.

The method can further include receiving, at a first adder, first and second shares of a first operand. The method can further include generating, by the first adder, the first sum. The method can further include receiving, at a second adder, first and second shares of a second operand; and generating, by the second adder, the second sum. The method can further include receiving, by a first subtractor (i) the first share of the second operand and (ii) a modulus value. The method can further include generating, by the first subtractor, a first difference.

The method can further include receiving, by a multiplexer, the first share of the second operand and the first difference. The method can further include providing, by the multiplexer either the first share of the second operand or the first difference as output based on a control signal. The control signal, when in a first state, configures the circuit as an adder and when in a second, different state, configures the circuit as a subtractor.

The method can further include receiving, by a third adder, the first sum and a constant value. The method can further include generating, by the third adder, a third sum, wherein the value determined based on the first sum is the third sum. The method can further include providing, by first and second logic gates situated between the shifter and the B2A conversion operator and based on the shifted first Boolean value and the shifted second Boolean value, the representation of the shifted first Boolean value and the representation of the shifted second Boolean value. The method can further include receiving, by a second subtractor the first sum and the first arithmetic value. The method can further include generating, by the second subtractor, a first result. The method can further include receiving, by a third subtractor, the second sum and the second arithmetic value. The method can further include generating, by the third subtractor, a second result.

A cryptography circuit can include first circuitry configured to perform number theoretic transform (NTT) on masked or shuffled secret values resulting in first and second NTT domain secrets. The circuit can further include second circuitry configured to perform pointwise multiplication on masked or shuffled polynomial coefficients, a mask value, and the second NTT domain secret resulting in intermediate NTT values. The circuit can further include the first circuitry further configured to perform INTT on a masked or shuffled intermediate value of the intermediate values resulting in INTT. The circuit can further include the second circuitry further configured to perform pointwise addition on masked or shuffled second secret value and the intermediate value resulting in a first masked secret. The circuit can further include the second circuitry further configured to perform pointwise subtraction on masked or shuffled challenge polynomial, second secret value, and another intermediate value of the intermediate values resulting in a second masked secret.

BRIEF DESCRIPTION OF DRAWINGS

FIG. 1 illustrates, by way of example, a diagram of an embodiment of an adder circuit that performs both modular addition and subtraction with masking.

FIGS. 2A and 2B, illustrate, by way of example, a flow diagram of an end-to-end cryptography technique that uses NTT.

FIG. 3 illustrates, by way of example, a block diagram of an embodiment of a method for improved security from quantum machines.

FIG. 4 illustrates, by way of example, a block diagram of an embodiment of a machine (e.g., a computer system) to implement one or more embodiments.

DETAILED DESCRIPTION

In the following description, reference is made to the accompanying drawings that form a part hereof, and in which is shown by way of illustration specific embodiments which may be practiced. These embodiments are described in sufficient detail to enable those skilled in the art to practice the embodiments. It is to be understood that other embodiments may be utilized and that structural, logical, and/or electrical changes may be made without departing from the scope of the embodiments. The following description of embodiments is, therefore, not to be taken in a limited sense, and the scope of the embodiments is defined by the appended claims.

Module-Lattice-based digital signature algorithm (ML-DSA) CRYSTALS-Dilithium belongs to the lattice-based family of cryptographic algorithms and is specifically designed as a digital signature scheme. CRYSTALS-Dilithium includes three primary routines: key generation, signature generation, and signature verification. Given that signature verification solely relies on public variables, it is inherently secure against SCAs and does not require specific countermeasures.

In CRYSTALS-Dilithium, the modular operations used include addition and subtraction within a modular field defined by the prime number 8,380,417, denoted as $q$, which can also be represented as $2^{23} - 2^{13} + 1$. Operations involve adding two numbers, $a$ and $b$, yielding $c=(a+b) \bmod(q)$, and similarly for subtraction $c=(a-b) \bmod(q)$. Both operations are followed by a check to determine if the result is equal to or greater than $q$. If the sum or difference is greater than, or equal to $q$, an additional subtraction of $q$ is performed.

Masking introduces randomized shares that are processed independently, complicating a mechanism for checking results since shares cannot be combined to perform a full comparison directly.

An improved adder circuit that performs both modular addition and subtraction, with masking, is provided.

Subtraction, using the adder circuit, is modified by subtracting an operand from $q$, allowing for addition of a negative equivalent in modulo space. The following equation summarizes the negative equivalence:

$$(a-b) \bmod(q) = (a+(q-b)) \bmod(q)$$

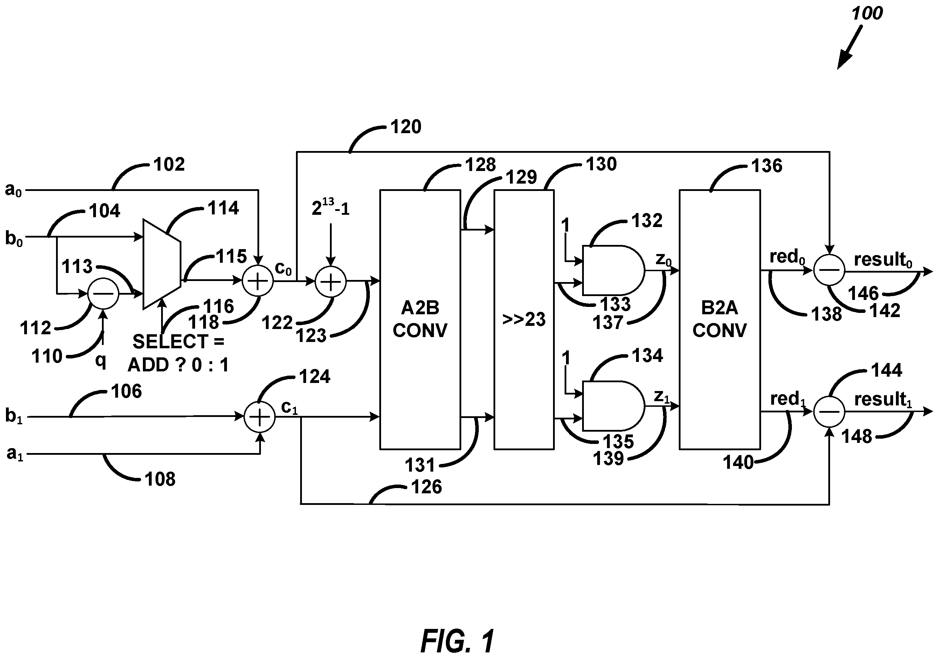

FIG. 1 illustrates, by way of example, a diagram of an embodiment of an adder circuit 100 that performs both modular addition and subtraction with masking. The circuit 100 as illustrated includes subtractors 112, 142, 144, multiplexer 114, adders 118, 122, 124, arithmetic to Boolean (A2B) converter 128, shifter 130, AND gates 132, 134, and Boolean to arithmetic (B2A) converter 136.

For masking, the operands $a$ and $b$ into $d$ shares, where $d \geq 1$. The shares of $a$, in the example of FIG. 1, are $a_0$ 102 and $a_1$ 108. The shares of $b$, in the example of FIG. 1, are $b_0$ 104 and $b_1$ 106. Consider generating a random number, $r$, where $r$ is a randomly sampled integer in modulo $Q$ (where $Q$ is a power of two greater than $q$). The shares of $a$ can be determined as $a_0 = a - r$ and $a_1 = r$. A similar operation can be performed to determine the shares of $b$. Instead of a single addition, which is typical of non-masked operations, one can perform two additions:

$$c_0 = (a_0 + b_0) \bmod(Q)$$

$$c_1 = (a_1 + b_1) \bmod(Q).$$

If $c_0 + c_1$ exceeds $q$, a subtraction can be performed, yet the shares cannot be directly combined to verify whether $c_0 + c_1$ exceeds $q$. Instead, one can implement a rollover check:

$$uRolled_0 = (c_0 + 2^{13} - 1)$$

$$uRolled_1 = c_1$$

$uRolled_0$ and $uRolled_1$ can then be converted into the Boolean domain to enable bitwise operations:

$$uBoolean_0, uBoolean_1 = \text{A2BConv}(uRolled_0, uRolled_1)$$

The $uBoolean_0$ and $uBoolean_1$ values can be shifted by 23 bits to isolate the 24th bit:

$$z_0 = (uBoolean_0 \gg 23) \ \& \ 1$$

$$z_1 = (uBoolean_1 \gg 23) \ \& \ 1$$

The $z_0$ and $z_1$ Boolean results can then be converted back into the arithmetic domain, converted to their negative values, and then multiplied by $q$ to adjust the result based on the 24th bit status.

This adjustment ensures that the operation results in a modulo reduction:

$$red_0, red_1 = \text{B2A}(z_0, z_1)$$

The $result_0$ and $result_1$ are $c_0$ and $c_1$ adjusted by the reduction value, ensuring the entire operation adheres to modulo constraints. This solution effectively integrates secure cryptographic practices with minimal hardware overhead, ensuring robust protection against SCA attacks while maintaining efficiency.

In using the circuit 100 to perform the masked modulo addition or subtraction, the subtractor 112 receives $b_0$ 104 and $q$ 110 and produces a result that is a difference 113, $b_0 - q$. The multiplexer 114 receives $b_0$ 104, the difference 113, and a control signal 116 as input. The control signal 116 determines which of the $b_0$ 104 and the difference 113 is provided as output 115. The control signal 116 indicates whether the circuit 100 is in add mode or subtract mode. In the example of FIG. 1, when the control signal 116 is one (1) the circuit 100 is in add mode and when the control signal 116 is zero (0) the circuit 100 is in subtract mode.

When the multiplexer 114 is in subtract mode, the difference 113 is provided as the output 115. When the multiplexer 114 is in add mode, $b_0$ 104 is provided as the output 115.

The adder 118 receives the output 115 and $a_0$ 102 as input and generates a sum, $c_0$ 120 as output. $c_0$ 120 is $a_0 + b_0$ when the multiplexer 114 is in add mode. $c_0$ 120 is $a_0 + (b_0 - q)$ when the multiplexer 114 is in subtract mode.

The adder 122 receives $c_0$ 120 and an integer equal to $2^{13}$-1 as input. The adder 122 generates a sum 123 that is $c_0 + 2^{13} - 1$.

The adder 124 receives $b_1$ 106 and $a_1$ 108 as input and generates a sum, $c_1$ 126 as output. $c_1 = b_1 + a_1$. The A2B converter 128 converts c1 and the sum 123 to Boolean values 129, 131, respectively. Boolean values are numbers represented in binary.

The Boolean values 129, 131 are shifted right by shifter 130. The shifting, by the shifter 130 generates Boolean values 133, 135 that are either one (1) or zero (0). The shifting by the shifter 130 shifts the most significant bit of the Boolean values 129, 131 to a first digit.

The Boolean value 133 is provided, along with a one (1) value, as input to an AND gate 132. The AND gate 132 produces an output, $z_0$ 137 that is one (1) if the Boolean value 133 is one (1) and zero (0) if the Boolean value 133 is zero (0). The difference between the Boolean value 133 and $z_0$ 137 is that $z_0$ 137 is only a single bit, while the Boolean value 133 has multiple bits.

The Boolean value 135 is provided, along with a one (1) value, as input to an AND gate 134. The AND gate 134 produces an output, $z_1$ 139 that is one (1) if the Boolean value 135 is one (1) and zero (0) if the Boolean value 135 is zero (0). The difference between the Boolean value 135 and $z_1$ 139 is that $z_1$ 139 is only a single bit, while the Boolean value 135 has multiple bits.

The B2A converter 136 receives $z_0$ 137 and $z_1$ 139, which are in Boolean. The B2A converter 136 generates $red_0$ 138 and $red_1$ 140, which are the arithmetic representations of $z_0$ 137 and $z_1$ 139, respectively.

The subtractor 142 receives $red_0$ 138 and $c_0$ 120 as input. The subtractor 142 generates a $result_0$ 146 that is equal to $c_0 - red_0$. The subtractor 144 receives $red_1$ 140 and $c_1$ 126 as input. The subtractor 144 generates a $result_1$ 148 that is equal to $c_1 - red_1$.

Both masking and shuffling provide protection against SCA attacks. Masking comes at a relatively high cost, in terms of time and resources consumed, as compared to shuffling. In implementation, one can elect to intelligently employ shuffling, masking, or a combination thereof to satisfy their security and compute bandwidth needs. What follows is an analysis of an efficient, and secure, implementation of NTT/INTT. Rather than simply masking an entire implementation, one can selectively mask certain operations and provide a low-cost solution with high security.

Using CRYSTALS-Dilithium algorithm, for example, a pair of secret and public keys are generated. This routine starts with a seed that goes through two functions called ExpandA and ExpandS. ExpandA generates public matrix A, while ExpandS generates two secret polynomials (*S1* and *S2*). Later steps include multiplication of *A* and *S1* and an addition with *S2*. The addition returns the public key, while the secret polynomials are used as secret keys.

In the process of generating signatures with CRYSTAL-Dilithium, the signer initiates by extracting various components from the private key. This includes essential elements such as the public random seed $\rho$, the 256-bit private random seed *K*, the 512-bit hash of the public key (*tr*), secret polynomial vectors (*S1* and *S2*), and a polynomial vector $t_0$ encoding the *d* least significant bits of each coefficient of the uncompressed public key polynomial *t*. Following this extraction, $\rho$ is expanded to the same matrix *A* utilized in key generation. Before signing the message, denoted as *M*, it is concatenated with the public-key hash *tr* and hashed down to a 512-bit message representative, $\mu$, leveraging a hash function *H*. Subsequently, an additional 512-bit seed $\rho'$ is computed to introduce private randomness during each signing operation. This seed $\rho'$ is determined through a hashing process involving *K*, a random number (rnd), and $\mu$. The type of randomness introduced by rnd varies depending on whether the "hedged" or "deterministic" variant of the algorithm is being used. The main part of the signing algorithm involves a rejection sampling loop, iterating until a valid signature is produced. Within this loop, various computations take place, including the pseudorandom sampling of a polynomial vector, the calculation of commitments and challenges, and the derivation of a response based on these elements and the secret polynomials. Finally, if all validity checks succeed, the signer outputs the final signature, encoding the commitment hash, response, and a hint facilitating verification.

A threat model used for analyzing whether to include shuffling or masking encompasses both profiled and non-profiled SCAs, representing a comprehensive approach to security considerations. Profiled attacks, a primary concern in this model, as discussed previously, involves a multi-step process. Initially, attackers profile and generate a dataset encompassing all possible secret keys on a target electronic device. Subsequently, the attacker captures a trace from the device and compares it against the existing dataset to identify the most closely matching label. Non-profiled attacks, while distinct, pose a significant threat as well. Unlike profiled attacks, they do not rely on pre-existing datasets for comparison. Instead, these attacks necessitate the acquisition of multiple side-channel traces during the attack. Typically, the attacker captures traces corresponding to an operation where one operand is known while the other remains undisclosed. Following this, the attacker employs differentiation techniques to discern subtle differences among the captured traces, deducing the secret information. This dual consideration of profiled and non-profiled attacks ensures a robust evaluation of potential vulnerabilities and underscores the importance within the broader landscape of security protocols.

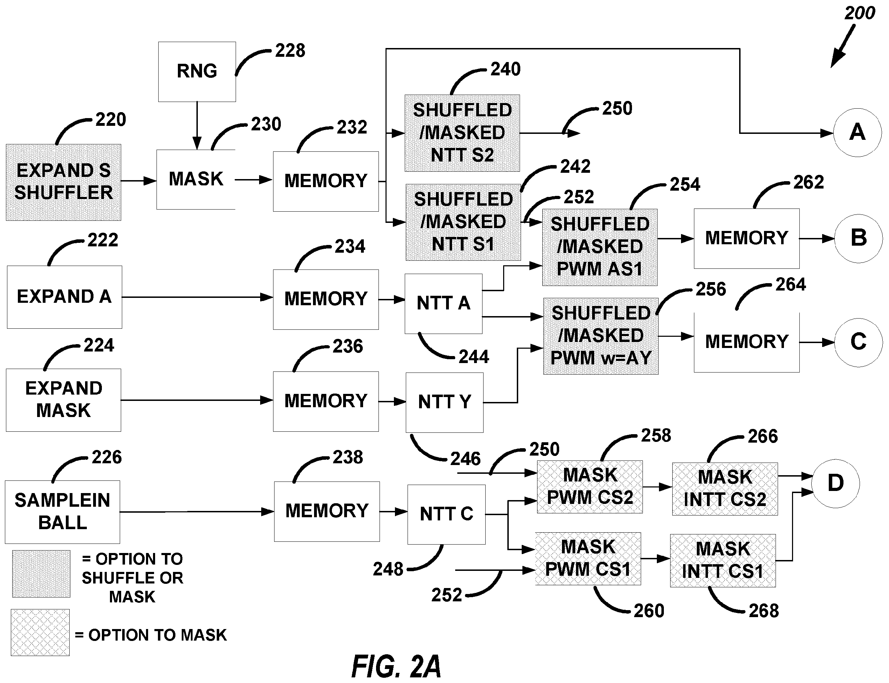

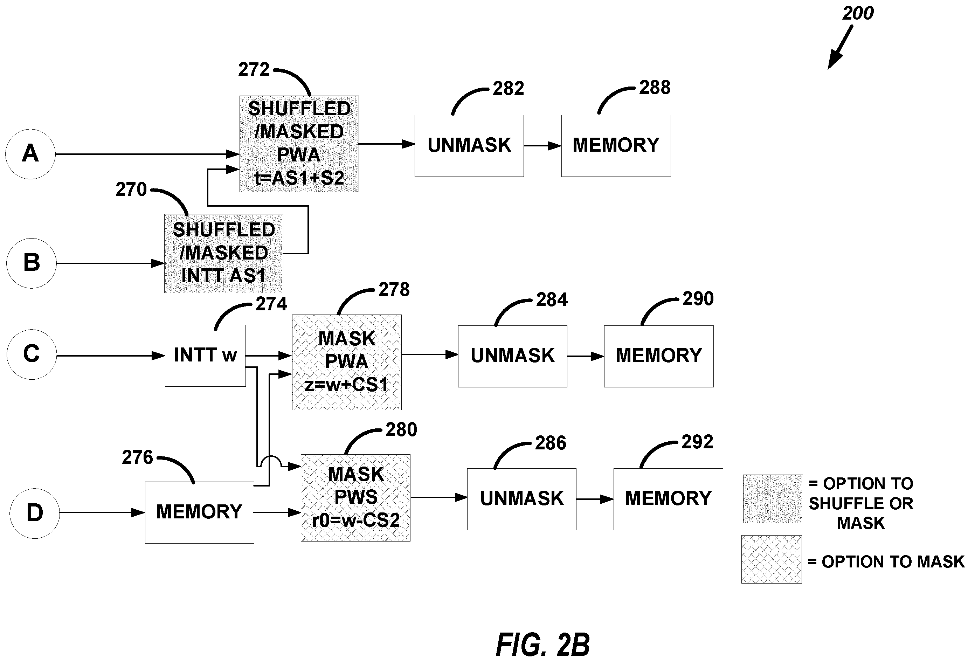

FIGS. 2A and 2B, illustrate, by way of example, a flow diagram of an end-to-end cryptography technique 200 that uses NTT. The block diagram depicted illustrates a solution that accommodates worst-case scenarios of attack on a CRYSTAL-Dilithium configuration, specifically with deterministic usage. Within the diagram, PWM, PWA, and PWS signify pointwise multiplication, pointwise addition, and pointwise subtraction, respectively. Each of the operations or other components of the technique 200 can be implemented in hardware, software, firmware, or a combination thereof. For example, first circuitry can be configured to perform one or more of INTT, NTT, PWA, PWM, and PWS. Any of the operations of the technique 200, alone or in combination, can be implemented in a discreet circuit. Circuitry of a circuit can be configured to implement the operations of the technique 200 programming a field programmable gate array (FPGA), producing an application specific integrated circuit (ASIC), or otherwise electrically connecting circuitry together. Circuitry can include resistors, transistors, capacitors, inductors, switches, logic gates (e.g., AND, OR, XOR, negate, or the like), amplifiers, analog to digital converters, digital to analog converters, rectifiers, power supplies, memories, or the like.

The rectangles with cross-hashing denote operations where masking is the sole viable option, while the rectangles with gray shading indicate instances where either shuffling or masking can be implemented.

The technique 200 employs masking countermeasures for operations where CRYSTAL-Dilithium relies on a fixed secret while allowing the other operand to be updated and potentially known by an attacker for each public and secret key pair. For instance, the attacker may transmit various messages, thereby updating the challenge polynomial ($C$) and observing the side-channel trace during its PWM with either secret $S1$ or $S2$ polynomials. Another scenario involves PWA or PWS with an operand including the product of $C$ and $S2$ multiplication or $C$ and $S1$ multiplication.

The technique 200 maintains flexibility in countermeasures for the rectangles with cross-hashing by offering two options: masking and shuffling. These options are extended to operations where a secret operand interacts with a public value that remains unchanged with each new message. Additionally, the same flexibility is provided when the secret undergoes NTT/INTT operations, as it does not interact with a known value.

This technique offers side-channel security by employing either masking and/or shuffling. It also promises efficiency by employing costly countermeasures only for the required operations, while some other operations can be protected with lightweight countermeasure shuffling.

The technique 200 as illustrated includes a plurality of expand operations including Expand $S$ 220, Expand $A$ 222, and Expand Mask 224. Expanding a variable means to add a prefix or suffix of digits to the variable before hashing. For each iteration, the prefix or suffix is updated, and the hash thus provides outputs using a shorter input with different prefixes or suffixes.

The SampleInBall 226 generates a challenge polynomial, $C$.

A random number generator 228 generates a random number, rnd, and provides the random number to a masking operation 230. Both masking and shuffling can be applied to $S$. $Y$ is not directly masked, but the NTT of $Y$ is masked. Thus, different shares of $Y$ are output before being input into a PWM operation.

Memories 232, 234, 236, 238, which can be different portions of a same memory or physically separate memories, store the results of Expand S 220, Expand A 222, Expand Mask 224, and SampleInBall operation 226, respectively.

An NTT on $S2$ is performed at operation 240 to generate $S2$ 250 in the NTT domain. The operation 240 can either be masked, shuffled, or a combination thereof.

An NTT on $S1$ is performed at operation 242 to generate $S1$ 252 in the NTT domain. The operation 242 can either be masked, shuffled, or a combination thereof.

An NTT is performed on $A$ at operation 244. Since $A$ is not a secret, there is no benefit from performing masking or shuffling on $A$.

An NTT Is performed on mask, $Y$, at operation 246. Since $Y$ is not a secret, there is no benefit from performing masking or shuffling on $Y$.

An NTT is performed on the challenge polynomial, $C$, at operation 248. Since $C$ is not a secret, there is no benefit from performing masking or shuffling on $C$.

At operation 254, a PWM is performed on $A$ and $S1$ 252 to generate $AS1$ in the NTT domain. The operation 254 can benefit from masking, shuffling, or a combination thereof since it involves the secret $S1$ 252.

At operation 256, a PWM is performed on $A$ and $Y$ to generate $w = AY$. The operation 256 can benefit from masking, shuffling, or a combination thereof since this operation recovers $Y$. If $Y$ is recovered, it can help determine $S1$ or $S2$.

At operation 258, PWM is performed on $C$ and $S2$ 250 in the NTT domain to generate $CS2$. The operation 258 can benefit from masking since it includes the secret and is a simple multiplication.

At operation 260, PWM is performed on $C$ and $S1$ 252 in the NTT domain to generate $CS1$. The operation 260 can benefit from masking since it includes the secret and is a simple multiplication.

At operation 266, an INTT can be performed on $CS2$. Again, this operation includes the secret and can benefit from masking. One can perform masking on the first stage of determining CS2 and refrain from masking on further operations. Masking on other stages can be skipped because enough security is provided with masking the first stage. NTT is already a kind of shuffling. NTT mixes coefficients by multiplying them with each other. The attacker needs to solve the first stage to go to the second stage. Since the first stage is masked, it is making its job harder. Now, the attacker needs to have hypothetical guesses on the first stage output and then perform the attack on the second stage. Such an attack is much harder.

At operation 268, an INTT can be performed on CS1. Again, this operation includes the secret and can benefit from masking.

Memories 262, 264, 276 store AS1 in NTT domain, w in NTT domain, and CS1 and CS2 in number domain (normal integer representation), respectively. Any of the memories of the operation 200 can be different portions of the same memory or physically separate memories.

Operation 270 includes performing an INTT on AS1. The operation 270 can include masking, shuffling, or a combination thereof since it includes a secret.

Operation 272 includes PWA on AS1 and S2 to generate t = AS1 + S2. The operation 272 can include masking, shuffling, or a combination thereof since it includes both secrets.

An operation 274 includes performing an INTT on w. Since this operation does not include any secrets, it can be performed without shuffling or masking.

At operation 278, PWA can be performed on w and CS1 resulting in z = w + CS1. The operation 278 can be masked because it includes the secret, S1.

At operation 280, PWS can be performed on w and CS2 resulting in r0 = w - CS2. The operation 280 can be masked because it includes the secret, S2.

Operations 282, 284, 286 include unmasking the values t, z, and r0, respectively. Unmasking includes determining the actual values. The unmasked values are stored in the memories 288, 290, 292.

NTT and INTT can be used to achieve more efficient polynomial multiplication in lattice-based cryptosystems. NTT and INTT help reduce algorithm complexity from $O(n^2)$ to $O(n\ log\ n)$. The complexity of the NTT and INTT computation can benefit from improvement in terms of efficiency so as to help improve operation of the lattice-based cryptosystems.

NTT and INTT operations can be accomplished iteratively. NTT and INTT can be performed by applying a sequence of "butterfly operations" on the input polynomial coefficients. Butterfly operations are arithmetic operations that combine two coefficients of polynomials to obtain two outputs. The NTT and INTT operations can be computed in a logarithmic number of steps using repeated butterfly operations.

Pseudocode for an iterative NTT operation using a CT butterfly operator circuit is provided:

## In-Place NTT Algorithm using CT Butterfly Operator Circuit

Require: $a(x) \in R_q, \omega_n \in \mathbb{Z}_q, n = 2^l$

Ensure: $\hat{a}(x) = NTT(a) \in R_q$

1: $\hat{a} \leftarrow bit - reverse(a)$

2: for i from 1 to $l$ do

3:     $m = 2^{l-i}$

4:     for $j$ from 0 to $2^{i-1}$-1 do

5:         $W \leftarrow \omega_n^{1+j}$

6:         for $k$ from 0 to $m$-1 do

7:             $U \leftarrow \hat{a}[2jm + k]$

8:             $V \leftarrow \hat{a}[2jm + k + m]\ mod\ q$

9:             $T \leftarrow V \cdot W$

10:             $\hat{a}[2jm + k] = U + T\ mod\ q$

11: $\qquad \hat{a}[2jm + k + m] = U - T \bmod q$

12:       end for

13:    end for

14: end for

15: return $\hat{a}(x) \in R_q$

where $a$ is a polynomial and $\omega$ is a twiddle factor, and $n$ is a number of coefficients in the polynomial.

What follows is a description of NTT/INTT. Let $q$ be a prime number and $\mathbb{Z}_q$ be the ring of integers modulo $q$.

Define the ring of polynomials for some integer $N$ as $R_q = \mathbb{Z}_q[X]/(X^N + 1)$, where the polynomials have $n$ coefficients, each modulo $q$. Regular font lowercase letters ($a$) represent single polynomials, bold lowercase letters ($a$) represent polynomial vectors, and bold uppercase letters ($A$) to represent a matrix of polynomials. Representations in the NTT domain are represented by ($\hat{a}$), ($\hat{a}$) and ($\hat{A}$), respectively. Let $a$ and $b$ be polynomial vectors in $R_q$. Let $a \circ b \in R_q$ denote coefficient-wise multiplication of polynomials. The $\circ$ product of a matrix and a vector is the natural extension of coefficient-wise multiplication of the polynomial vectors.

A naive method of polynomial multiplication has $O(n^2)$ complexity. This complexity can be reduced by using NTT. To multiply two polynomials efficiently in lattice-based cryptography, the polynomial rings of the form $R_q = \mathbb{Z}_q[X]/(X^N + 1)$ can be used, where ($X^N + 1$) enables fast polynomial division. The NTT transform maps polynomials to the NTT domain at the cost of $O(n * logn)$ where multiplying their coefficients results in a polynomial that corresponds to the product of the original polynomials modulo $q$ and ($X^N + 1$). Coefficient-wise multiplication has a complexity of $O(n)$. A total time complexity is thus $O(n \cdot log\ n)$.

The NTT is a generalization of a fast Fourier transform (FFT) defined in a finite field. Suppose $f$ is a polynomial of degree n with coefficients in $\mathbb{Z}_q$, as:

$$f = \sum_{i=0}^{n-1} f_i X^i$$

FFT uses the twiddle factor $\omega_n$ $n$-th root of unity of form $e^{2\pi j/n}$, while NTT has $\omega_n \in \mathbb{Z}_q$ such that $\omega_n$ be a primitive $n$-th root of unity modulo $q$, i.e. $\omega_n^n = 1 \bmod q$. The NTT transforms $f$, i.e., $\hat{f} = NTT(f)$, is computed as follows for each $i \in \{0,1,...,n - 1\}$:

$$\hat{f}_i = \sum_{j=0}^{n-1} f_j \omega_n^{ij}$$

The INTT recovers $f$ from $\hat{f}$ as:

$$f_i = \sum_{j=0}^{n-1} \hat{f}_j \omega_n^{-ij}$$

Hence, the multiplication between two polynomials $f$ and $g$ using NTT can be performed as:

$$f \cdot g = INTT(NTT(f) \circ NTT(g))$$

NTT algorithm is shown in pseudocode elsewhere herein.

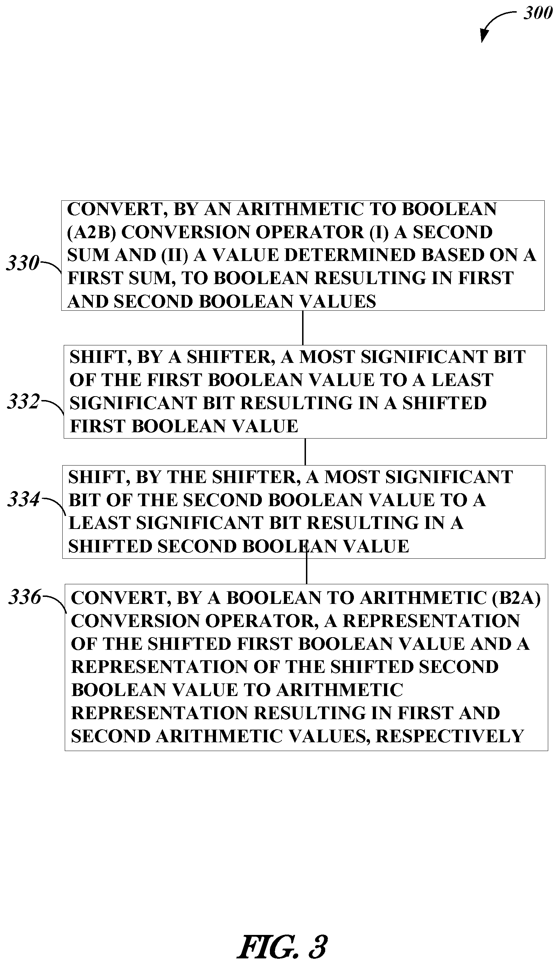

FIG. 3 illustrates, by way of example, a block diagram of an embodiment of a method 300 for modular adder and subtractor circuit operation with masking. The method 300 as illustrated includes converting, by an arithmetic to Boolean (A2B) conversion operator (i) a second sum and (ii) a value determined based on a first sum, to Boolean resulting in first and second Boolean values, at operation 330; shifting, by a shifter, a most significant bit of the first Boolean value to a least significant bit resulting in a shifted first Boolean value, at operation 332; shifting, by the shifter, a most significant bit of the second Boolean value to a least significant bit resulting in a shifted second Boolean value, at operation 334; and converting, by a Boolean to arithmetic (B2A) conversion operator, a representation of the shifted first Boolean value and a representation of the shifted second Boolean value to arithmetic representation resulting in first and second arithmetic values, respectively, at operation 336.

The method 300 can further include receiving, at a first adder, first and second shares of a first operand. The method 300 can further include generating, by the first adder, the first sum. The method 300 can further include receiving, at a second adder, first and second shares of a second operand. The method 300 can further include generating, by the second adder, the second sum. The method 300 can further include receiving, by a first subtractor (i) the first share of the second operand and (ii) a modulus value. The method 300 can further include generating, by the first subtractor, a first difference.

The method 300 can further include receiving, by a multiplexer, the first share of the second operand and the first difference. The method 300 can further include providing, by the multiplexer either the first share of the second operand or the first difference as output based on a control signal. The control signal, when in a first state, configures the circuit as an adder and when in a second, different state, configures the circuit as a subtractor.

The method 300 can further include receiving, by a third adder, the first sum and a constant value. The method 300 can further include generating, by the third adder, a third sum, wherein the value determined based on the first sum is the third sum. The method 300 can further include providing, by first and second logic gates situated between the shifter and the B2A conversion operator and based on the shifted first Boolean value and the shifted second Boolean value, the representation of the shifted first Boolean value and the representation of the shifted second Boolean value. The method 300 can further include receiving, by a second subtractor the first sum and the first arithmetic value. The method 300 can further include generating, by the second subtractor, a first result. The method 300 can further include receiving, by a third subtractor, the second sum and the second arithmetic value. The method 300 can further include generating, by the third subtractor, a second result.

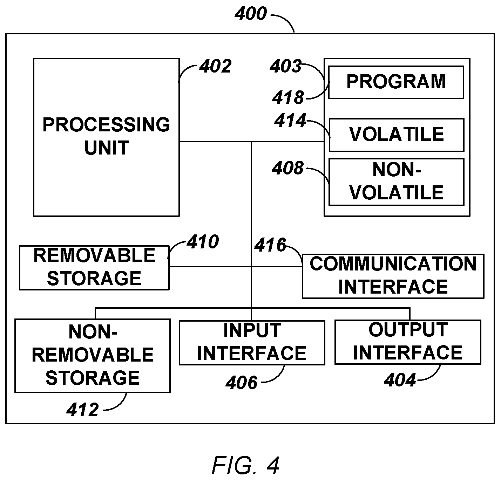

FIG. 4 illustrates, by way of example, a block diagram of an embodiment of a machine 400 (e.g., a computer system) to implement one or more embodiments. The machine 400 can implement a secure cryptography circuit or technique as discussed herein. Any combination of the components of the circuit 100, such as the subtractor 112, the adder 118, the adder 122, the adder 124, the A2B conversion operator 128, the shifter 130, the logic gates 132, 134 (note the logic gates are illustrated as AND gates and there are other configurations of logic gates that can achieve the same logic), B2A conversion circuitry 136, subtractor 142, or the subtractor 144, or any of the operations or components of the technique 200 can include one or more of the components of the machine 400, or a component or operations thereof can be implemented, at least in part, using a component of the machine 400. One example machine 400 (in the form of a computer), may include a processing unit 402, memory 403, removable storage 410, and non-removable storage 412. Although the example computing device is illustrated and described as machine 400, the computing device may be in different forms in different embodiments. For example, the computing device may instead be a smartphone, a tablet, smartwatch, or other computing device including the same or similar elements as illustrated and described regarding FIG. 4. Devices such as smartphones, tablets, and smartwatches are generally collectively referred to as mobile devices. Further, although the various data storage elements are illustrated as part of the machine 300, the storage may also or alternatively include cloud-based storage accessible via a network, such as the Internet.

Memory 403 may include volatile memory 414 and non-volatile memory 408. The machine 400 may include - or have access to a computing environment that includes - a variety of computer-readable media, such as volatile memory 414 and non-volatile memory 408, removable storage 410 and non-removable storage 412. Computer storage includes random access memory (RAM), read only memory (ROM), erasable programmable read-only memory (EPROM) & electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage or other magnetic storage devices capable of storing computer-readable instructions for execution to perform functions described herein.

The machine 400 may include or have access to a computing environment that includes input 406, output 404, and a communication connection 416. Output 404 may include a display device, such as a touchscreen, that also may serve as an input device. The input 406 may include one or more of a touchscreen, touchpad, mouse, keyboard, camera, one or more device-specific buttons, one or more sensors integrated within or coupled via wired or wireless data connections to the machine 400, and other input devices. The computer may operate in a networked environment using a communication connection to connect to one or more remote computers, such as database servers, including cloud-based servers and storage. The remote computer may include a personal computer (PC), server, router, network PC, a peer device or other common network node, or the like. The communication connection may include a Local Area Network (LAN), a Wide Area Network (WAN), cellular, Institute of Electrical and Electronics Engineers (IEEE) 802.11 (Wi-Fi), Bluetooth, or other networks.

Computer-readable instructions stored on a computer-readable storage device are executable by the processing unit 402 (sometimes called processing circuitry) of the machine 400. A hard drive, CD-ROM, and RAM are some examples of articles including a non-transitory computer-readable medium such as a storage device. For example, a computer program 418 may be used to cause processing unit 402 to perform one or more methods or algorithms described herein.

The operations, functions, or algorithms described herein may be implemented in software in some embodiments. The software may include computer executable instructions stored on computer or other machine-readable media or storage device, such as one or more non-transitory memories (e.g., a non-transitory machine-readable medium) or other type of hardware based storage devices, either local or networked. Further, such functions may correspond to subsystems, which may be software, hardware, firmware, or a combination thereof. Multiple functions may be performed in one or more subsystems as desired, and the embodiments described are merely examples. The software may be executed on a digital signal processor, ASIC, microprocessor, central processing unit (CPU), graphics processing unit (GPU), field programmable gate array (FPGA), or other type of processor operating on a computer system, such as a personal computer, server or other computer system, turning such computer system into a specifically programmed machine. The functions or algorithms may be implemented using processing circuitry, such as may include electric and/or electronic components (e.g., one or more transistors, resistors, capacitors, inductors, amplifiers, modulators, demodulators, antennas, radios, regulators, diodes, oscillators, multiplexers, logic gates, buffers, caches, memories, GPUs, CPUs, field programmable gate arrays (FPGAs), or the like).

Additional Notes and Examples. Devices, systems, and methods for secure modular addition and subtraction are provided.

Example 1 includes a modular adder and subtractor circuit with masking, the circuit comprising an arithmetic to Boolean (A2B) conversion operator configured to convert (i) a second sum and (ii) a value determined based on a first sum, to Boolean resulting in first and second Boolean values, a shifter configured to (i) make a most significant bit of the first Boolean value a least significant bit resulting in a shifted first Boolean value and (ii) make the most significant bit of the second Boolean value a least significant bit resulting in a shifted second Boolean value, and a Boolean to arithmetic (B2A) conversion operator, configured to convert a representation of the shifted first Boolean value and a representation of the shifted second Boolean value to arithmetic representation resulting in first and second arithmetic values, respectively.

In Example 2, Example 1 further includes a first adder configured to receive first and second shares of a first operand and generate the first sum.

In Example 3, Example 2 further includes a second adder configured to receive first and second shares of a second operand and generate the second sum.

In Example 4, Example 3 further includes a first subtractor configured to receive (i) the first share of the second operand and (ii) a modulus value and generate a first difference.

In Example 5, Example 4 further includes a multiplexer configured to receive the first share of the second operand and the first difference and provide either the first share of the second operand or the first difference as output based on a control signal.

In Example 6, Example 5 further includes, wherein the control signal, when in a first state, configures the circuit as an adder and when in a second, different state, configures the circuit as a subtractor.

In Example 7, at least one of Examples 5-6 further includes a third adder configured to receive the first sum and a constant value and generate a third sum, wherein the value determined based on the first sum is the third sum.

In Example 8, at least one of Examples 1-7 further includes first and second logic gates situated between the shifter and the B2A conversion operator, the first logic gate configured to provide, based on the shifted first Boolean value, the representation of the shifted first Boolean value and the second logic gate configured to provide, based on the shifted second Boolean value, the representation of the shifted second Boolean value

In Example 9, Example 8 further includes second and third subtractors, the second subtractor, the second subtractor configured to receive the first sum and the first arithmetic value and generate a first result, the third subtractor configured to receive the second sum and the second arithmetic value and generate a second result.

Example 10 includes a method for modular adder and subtractor circuit operation with masking, the method comprising converting, by an arithmetic to Boolean (A2B) conversion operator (i) a second sum and (ii) a value determined based on a first sum, to Boolean resulting in first and second Boolean values, shifting, by a shifter, a most significant bit of the first Boolean value to a least significant bit resulting in a shifted first Boolean value, shifting, by the shifter, a most significant bit of the second Boolean value to a least significant bit resulting in a shifted second Boolean value, and converting, by a Boolean to arithmetic (B2A) conversion operator, a representation of the shifted first Boolean value and a representation of the shifted second Boolean value to arithmetic representation resulting in first and second arithmetic values, respectively.

In Example 11, Example 10 further includes receiving, at a first adder, first and second shares of a first operand,

generating, by the first adder, the first sum, receiving, at a second adder, first and second shares of a second operand, and generating, by the second adder, the second sum.

In Example 12, Example 11 further includes receiving, by a first subtractor (i) the first share of the second operand and (ii) a modulus value, and generating, by the first subtractor, a first difference.

In Example 13, Example 12 further includes receiving, by a multiplexer, the first share of the second operand and the first difference, and providing, by the multiplexer either the first share of the second operand or the first difference as output based on a control signal.

In Example 14, Example 13 further includes, wherein the control signal, when in a first state, configures the circuit as an adder and when in a second, different state, configures the circuit as a subtractor.

In Example 15, Example 14 further includes receiving, by a third adder, the first sum and a constant value, and generating, by the third adder, a third sum, wherein the value determined based on the first sum is the third sum.

In Example 16, at least one of Examples 10-15 further includes providing, by first and second logic gates situated between the shifter and the B2A conversion operator and based on the shifted first Boolean value and the shifted second Boolean value, the representation of the shifted first Boolean value and the representation of the shifted second Boolean value.

In Example 17, at least one of Examples 12-16 further includes receiving, by a second subtractor the first sum and the first arithmetic value, generating, by the second subtractor, a first result, receiving, by a third subtractor, the second sum and the second arithmetic value, and generating, by the third subtractor, a second result.

Example 18 includes a cryptography circuit comprising first circuitry configured to perform number theoretic transform (NTT) on masked or shuffled secret values resulting in first and second NTT domain secrets, second circuitry configured to perform pointwise multiplication on masked or shuffled polynomial coefficients, a mask value, and the second NTT domain secret resulting in intermediate NTT values, and the first circuitry further configured to perform INTT on a masked or shuffled intermediate value of the intermediate values resulting in INTT.

In Example 19, Example 18 further includes the second circuitry further configured to perform pointwise addition on masked or shuffled second secret value and the intermediate value resulting in a first masked secret.

In Example 20, Example 19 further includes the second circuitry further configured to perform pointwise subtraction on masked or shuffled challenge polynomial, second secret value, and another intermediate value of the intermediate values resulting in a second masked secret

Although a few embodiments have been described in detail above, other modifications are possible. For example, the logic flows depicted in the figures do not require the order shown, or sequential order, to achieve desirable results. Other steps may be provided, or steps may be eliminated, from the described flows, and other components may be added to, or removed from, the described systems. Other embodiments may be within the scope of the following claims.

**Claims**

1. A modular adder and subtractor circuit (100) with masking, the circuit (100) comprising:

   an arithmetic to Boolean (A2B) conversion operator (128) configured to convert (i) a second sum (126) and (ii) a value (123) determined based on a first sum, to Boolean resulting in first and second Boolean values (129, 131); a shifter (130) configured to (i) make a most significant bit of the first Boolean value (129) a least significant bit resulting in a shifted first Boolean value (133) and (ii) make the most significant bit of the second Boolean (131) value a least significant bit resulting in a shifted second Boolean value (135); and a Boolean to arithmetic (B2A) conversion operator (136), configured to convert a representation of the shifted first Boolean value (137) and a representation of the shifted second Boolean value (139) to arithmetic representation resulting in first and second arithmetic values (138, 140), respectively.

2. The circuit of claim 1 further comprising a first adder configured to receive first and second shares of a first operand and generate the first sum.

3. The circuit of claim 2, further comprising a second adder configured to receive first and second shares of a second operand and generate the second sum.

4. The circuit of claim 3, further comprising a first subtractor configured to receive (i) the first share of the second operand and (ii) a modulus value and generate a first difference.

5. The circuit of claim 4, further comprising a multiplexer configured to receive the first share of the second operand and the first difference and provide either the first share of the second operand or the first difference as output based on a control signal.

6. The circuit of claim 5, wherein the control signal, when in a first state, configures the circuit as an adder and when in a second, different state, configures the circuit as a subtractor.

7. The circuit of any claim 5 to 6, further comprising a third adder configured to receive the first sum and a constant value and generate a third sum, wherein the value determined based on the first sum is the third sum.

8. The circuit of any claim 1 to 7, further comprising first and second logic gates situated between the shifter and the B2A conversion operator, the first logic gate configured to provide, based on the shifted first Boolean value, the representation of the shifted first Boolean value and the second logic gate configured to provide, based on the shifted second Boolean value, the representation of the shifted second Boolean value.

9. The circuit of claim 8, further comprising second and third subtractors, the second subtractor, the second subtractor configured to receive the first sum and the first arithmetic value and generate a first result, the third subtractor configured to receive the second sum and the second arithmetic value and generate a second result.

10. A method (300) for modular adder and subtractor circuit operation with masking, the method (300) comprising:

converting (330), by an arithmetic to Boolean (A2B) conversion operator (i) a second sum and (ii) a value determined based on a first sum, to Boolean resulting in first and second Boolean values;
shifting (332), by a shifter, a most significant bit of the first Boolean value to a least significant bit resulting in a shifted first Boolean value;
shifting (334), by the shifter, a most significant bit of the second Boolean value to a least significant bit resulting in a shifted second Boolean value; and
converting (336), by a Boolean to arithmetic (B2A) conversion operator, a representation of the shifted first Boolean value and a representation of the shifted second Boolean value to arithmetic representation resulting in first and second arithmetic values, respectively.

11. The method of claim 10 further comprising:

receiving, at a first adder, first and second shares of a first operand;
generating, by the first adder, the first sum;
receiving, at a second adder, first and second shares of a second operand; and
generating, by the second adder, the second sum.

12. The method of claim 11, further comprising:

receiving, by a first subtractor (i) the first share of the second operand and (ii) a modulus value; and
generating, by the first subtractor, a first difference.

13. The method of claim 12, further comprising:

receiving, by a multiplexer, the first share of the second operand and the first difference; and
providing, by the multiplexer either the first share of the second operand or the first difference as output based on a control signal.

14. The method of claim 13, wherein the control signal, when in a first state, configures the circuit as an adder and when in a second, different state, configures the circuit as a subtractor.

15. A cryptography circuit comprising:

first circuitry (240, 242, 270) configured to perform number theoretic transform, NTT, on masked or shuffled secret values resulting in first and second NTT domain secrets (250, 252);
second circuitry configured to perform pointwise multiplication (254, 256) on masked or shuffled polynomial coefficients, a mask value, and the second NTT domain secret resulting in intermediate NTT values; and
the first circuitry (240, 242, 270) further configured to perform inverse NTT, INTT, on a masked or shuffled intermediate value of the intermediate values resulting in INTT intermediate values.

*100*

$a_0$
$b_0$
114
102
104
113
112
110
q
SELECT =
ADD ? 0 : 1
115
116
118
$c_0$
122
123
$2^{13}-1$
120
A2B
CONV
128
129
131
126
>>23
130
132
133
137
$z_0$
134
135
139
$z_1$
1
1
B2A
CONV
136
140
$red_0$
138
146
142
$result_0$
144
$red_1$
148
$result_1$
124
$c_1$
106
108
$b_1$
$a_1$

*FIG. 1*

FIG. 2A

EP 4 716 144 A2

14

EP 4 716 144 A2

*200*

**272**

SHUFFLED /MASKED PWA t=AS1+S2

**282**

UNMASK

**288**

MEMORY

A

**270**

SHUFFLED /MASKED INTT AS1

B

**274**

INTT w

**278**

MASK PWA z=w+CS1

**284**

UNMASK

**290**

MEMORY

C

**276**

MEMORY

**280**

MASK PWS r0=w-CS2

**286**

UNMASK

**292**

MEMORY

D

= OPTION TO SHUFFLE OR MASK

= OPTION TO MASK

*FIG. 2B*

300

| | CONVERT, BY AN ARITHMETIC TO BOOLEAN (A2B) CONVERSION OPERATOR (I) A SECOND SUM AND (II) A VALUE DETERMINED BASED ON A FIRST SUM, TO BOOLEAN RESULTING IN FIRST AND SECOND BOOLEAN VALUES |
|---|---|

330

| | SHIFT, BY A SHIFTER, A MOST SIGNIFICANT BIT OF THE FIRST BOOLEAN VALUE TO A LEAST SIGNIFICANT BIT RESULTING IN A SHIFTED FIRST BOOLEAN VALUE |
|---|---|

332

| | SHIFT, BY THE SHIFTER, A MOST SIGNIFICANT BIT OF THE SECOND BOOLEAN VALUE TO A LEAST SIGNIFICANT BIT RESULTING IN A SHIFTED SECOND BOOLEAN VALUE |
|---|---|

334

| | CONVERT, BY A BOOLEAN TO ARITHMETIC (B2A) CONVERSION OPERATOR, A REPRESENTATION OF THE SHIFTED FIRST BOOLEAN VALUE AND A REPRESENTATION OF THE SHIFTED SECOND BOOLEAN VALUE TO ARITHMETIC REPRESENTATION RESULTING IN FIRST AND SECOND ARITHMETIC VALUES, RESPECTIVELY |
|---|---|

336

*FIG. 3*

400

PROCESSING
UNIT
*402*

*403*
*418*
PROGRAM

*414*
VOLATILE

*408*
NON-
VOLATILE

REMOVABLE
STORAGE
*410*

*416*
COMMUNICATION
INTERFACE

NON-
REMOVABLE
STORAGE
*412*

INPUT
INTERFACE
*406*

OUTPUT
INTERFACE
*404*

*FIG. 4*